# EUROPÄISCHE PATENTSCHRIFT

(11) **EP 3 104 998 B1**
(45) Veröffentlichungstag und Bekanntmachung des Hinweises auf die Patenterteilung: **13.11.2019**
(21) Anmeldenummer: 15701782.3
(22) Anmeldetag: 29.01.2015
(51) Int. Cl.: B23D 59/00, G05B 19/406, B27B 5/06, F16P 3/14

(54) **VERFAHREN ZUM BETREIBEN EINER PLATTENAUFTEILANLAGE, UND PLATTENAUFTEILANLAGE ZUR AUSFÜHRUNG EINES SOLCHEN VERFAHRENS**
PROCESS FOR OPERATING A BOARD PARTITIONING DEVICE, AND BOARD PARTITIONING DEVICE TO CARRY-OUT SUCH A PROCESS
PROCÉDÉ POUR OPÉRER UN DISPOSITIF DE DÉCOUPE DE PLAQUES, ET DISPOSITIF DE DÉCOUPE DE PLAQUES POUR LA MISE EN OEUVRE D'UN TEL PROCÉDÉ

(30) Priorität: 14.02.2014 DE 102014202733
(43) Veröffentlichungstag der Anmeldung: 21.12.2016
(73) Patentinhaber: HOMAG Plattenaufteiltechnik GmbH, 75365 Calw (DE)
(72) Erfinder: MARTYNENKO, Sergey, 71083 Herrenberg (DE)
(74) Vertreter: DREISS Patentanwälte PartG mbB
(86) Internationale Anmeldenummer: PCT/EP2015/051769
(87) Internationale Veröffentlichungsnummer: WO 2015/121073

(56) Entgegenhaltungen:
- WO-A1-01/33134
- WO-A1-2009/040151
- WO-A1-2011/051285
- WO-A1-2013/046522
- WO-A1-2013/140514
- WO-A1-2015/055465
- DE-A1-102010 017 857
- US-A1- 2007 028 730

## Beschreibung

Die Erfindung betrifft ein Verfahren zum Betreiben einer, Plattenaufteilanlage nach dem Oberbegriff des Anspruchs 1.

DE 10 2009 038 120 A1 beschreibt eine Plattenaufteilanlage zum Aufteilen großformatige Platten, beispielsweise für die Möbelindustrie. Hierzu verfügt die Plattenaufteilanlage über einen Programmschieber, der einer Aufteilsäge Platten zum Aufteilen zuführt. An einem Entnahmetisch steht eine Bedienperson und führt die Platten dem Programmschieber zu und entnimmt die aufgeteilten Platten. Über eine Anzeige- und Eingabevorrichtung kann die Bedienperson den Ablauf des Aufteilverfahrens steuern, beispielsweise Schnittpläne eingeben. DE 10 2008 014 869 A1 offenbart eine Plattenaufteilanlage, bei der ein im Bereich des Entnahmetisches vorhandenes Werkstück von einer Erfassungseinrichtung erfasst wird und bei der eine Handhabungsinformation an die Bedienperson abhängig von den erfassten Daten ausgegeben werden. DE 10 2010 017 857 A1 betrifft eine 3D-Sicherheitsvorrichtung zur Absicherung und Bedienung einer Maschine. Die Bedienung der Maschine kann durch die Bedienperson mittels Gesten erfolgen. Die US 2007/028730 A1 beschreibt eine Maschinensteuerung mittels Gesten einer Bedienperson. Die WO 2011/051285 A1, WO 2013/140514 A1, EP 2 829 370 A1, WO 2009/040151 A1 und WO 2013/046522 A1 betreffen Maschinen, bei denen ein Bereich der Maschine mittels Sensoren überwacht und die Maschine abhängig vom Ergebnis der Überwachung angesteuert wird. Die WO 01/33134 A1 beschreibt eine Einrichtung zum Erfassen und Auswerten von physiologischen Signalen, wobei dann, wenn die physiologischen Signale einen Gefahrenfall erkennen lassen, automatisiert Maßnahmen zum Entgegenwirken des Gefahren falls ausgelöst werden. Die WO 2015/055465 A1 beschreibt eine Vorrichtung zum Schutz vor Verletzungen einer Bedienperson durch eine Werkzeugmaschine.

Es wurde erkannt, dass die Arbeit bei den bekannten Anlagen für die Bedienperson bisweilen anstrengend sein kann. Ist die Bedienperson überfordert, steigt die Fehlerhäufigkeit und somit der Ausschuss. Hiervon ausgehend stellt sich vorliegende Erfindung die Aufgabe, ein Verfahren der eingangs genannten Art zu schaffen, bei dem möglichst wenig Ausschuss erzeugt wird.

Diese Aufgabe wird durch ein Verfahren mit den Merkmalen des Anspruchs 1 gelöst. Weiterbildungen der Erfindung sind in den Unteransprüchen angegeben. Weitere Merkmale der Erfindung sind aus den Figuren und der Figurenbeschreibung ersichtlich, wobei die Merkmale sowohl in Alleinstellung als auch in beliebigen Kombinationen für die Erfindung wesentlich sein können.

Die Erfindung zeichnet sich dadurch aus, dass die Plattenaufteilanlage mit der Bedienperson selbstständig interagiert. Wird festgestellt, dass die Bedienperson überlastet ist oder eine Überlastung droht, oder dass auf einfache Art und Weise die Belastung der Bedienperson verringert werden kann, wird die Steuerung der Plattenaufteilanlage so angepasst, dass die Belastung der Bedienperson verringert wird bzw. eine Überlastung gar nicht erst eintritt. Wird dagegen festgestellt, dass die Bedienperson aktuell eher unterfordert ist, kann die Steuerung der Plattenaufteilanlage ebenfalls entsprechend angepasst werden. Damit kann die Belastung der Bedienperson so gesteuert werden, dass eine optimale Prozesssicherheit gewährleistet ist. Dies führt zu einer Minimierung des Ausschusses und einer Verbesserung der Motivation der Bedienperson.

Eine Weiterbildung zeichnet sich dadurch aus, dass die Größe umfasst: eine Position der Bedienperson relativ zu einem Maschinenbereich, eine Körpergeschwindigkeit, eine Gliedmaßengeschwindigkeit, eine Körperbeschleunigung, eine Gliedmaßenbeschleunigung, ein Körperbewegungsmuster, ein Gliedmaßenbewegungsmuster, eine Pausenlänge zwischen Bewegungen, eine Körperhaltung, einen Puls, einen Blutdruck, eine Atemfrequenz, eine Körpertemperatur, eine Hautfeuchtigkeit, eine Lidweite, eine Pupillenweite, eine Mimik, ein Geräusch der Bedienperson. Alle diese Größen können allein oder in Kombination die Belastung bzw. das belastungstypische Verhalten der Bedienperson sehr gut beschreiben und für die Steuerung der Plattenaufteilanlage erfassbar und auswertbar machen. Auf eine aktuelle Überlastung der Bedienperson kann beispielsweise dann geschlossen werden, wenn eine oder mehrere Größen einen Grenzwert erreichen oder überschreiten. Auf eine drohende Überlastung bzw. eine mögliche Verringerung der Belastung kann beispielsweise geschlossen werden, wenn eine aktuelle Position der Bedienperson relativ zu einem Maschinenbereich um mehr als einen Grenzwert entfernt ist.

Eine besonders einfache Weiterbildung zeichnet sich dadurch aus, dass die Maschinengeschwindigkeit verlangsamt oder gestoppt wird, und/oder eine Anweisung an die Bedienperson ausgegeben wird, wenn die Auswertung der Größe ergibt, dass die Bedienperson überlastet ist.

Eine andere ebenfalls sehr einfach zu realisierende Weiterbildung zeichnet sich dadurch aus, dass die Plattenaufteilanlage gestartet oder die Maschinengeschwindigkeit erhöht wird, und/oder eine Anweisung an die Bedienperson ausgegeben wird, wenn die Auswertung der Größe ergibt, dass die Bedienperson unterfordert ist.

Eine Weiterbildung zeichnet sich dadurch aus, dass der Ablauf des durch die Plattenaufteilanlage ausgeführten Verfahrens, insbesondere die Reihenfolge oder Art der Verfahrensschritte, vom Ergebnis der Auswertung abhängt. Dies hat den Vorteil, dass beispielsweise eine Ergonomie für die Bedienperson verbessert werden kann, da sie optimal an die individuellen und aktuellen Bedürfnisse der Bedienperson angepasst ist. Der auf der Plattenaufteilanlage ablaufende Prozess wird also an die aktuellen Möglichkeiten der Bedienperson angepasst.

Eine Weiterbildung zeichnet sich dadurch aus, dass eine Maschinenkonfiguration von dem Ergebnis der Auswertung abhängt. Beispielsweise kann bei einer Plattenaufteilanlage die Position des Entnahmetisches an die aktuelle Position der Bedienperson angepasst werden, oder dessen Höhe wird an die aktuelle vertikale Position der Hände der Bedienperson angepasst.

Eine Weiterbildung hierzu zeichnet sich dadurch aus, dass die Maschinenkonfiguration umfasst: eine Position einer Werkstückeingabe und/oder einer Werkstückentnahme, eine Ausrichtung und/oder Lage eines Werkstücks, eine Position und/oder Darstellung eines Bedienungselements, eine Synchronisierung mit einer vorgelagerten und/oder nachgelagerten Einrichtung.

Eine Weiterbildung zeichnet sich dadurch aus, dass eine Eigenschaft einer Informationsausgabe vom Ergebnis der Auswertung abhängt. Dies verbessert die Interaktion der Plattenaufteilanlage mit der Bedienperson.

Eine Weiterbildung hierzu zeichnet sich dadurch aus, dass eine Eigenschaft der Informationsausgabe umfasst: eine Art und Weise der Informationsausgabe und einen Ort der Informationsausgabe. Beispielsweise kann die Informationsausgabe optisch und/oder akustisch erfolgen, es können Daten an eine andere Plattenaufteilanlage und/oder an eine andere Person (beispielsweise in der Arbeitsvorbereitung) übertragen werden, und die Art und Darstellung (Größe, Farbe) von Informationen beispielsweise auf einem Bildschirm kann geändert werden. Beispielsweise kann dann, wenn die Bedienperson eher weit weg von einem Bildschirm ist, die Buchstaben- oder Symbolgröße der Anzeige auf dem Bildschirm vergrößert werden, oder es kann ein Lautsprecher auf die aktuelle Position der Bedienperson ausgerichtet werden. Auch kann gewählt werden, ob die Information an der Plattenaufteilanlage bzw. an einer bestimmten Stelle der Plattenaufteilanlage ausgegeben wird oder beispielsweise an einer nachgeschalteten Fertigungs- oder Bearbeitungseinrichtung oder einem Abstapelplatz, an einem Bildschirm, einem Projektor, einem Lautsprecher, einem Kopfhörer, oder sogar haptisch in Form eines Vibrierens eines Bedienelements.

Eine Weiterbildung zeichnet sich dadurch aus, dass es eine Lernphase umfasst, während der die Auswertung der Größe an die Person der Bedienperson adaptiert wird. Beispielsweise kann hierdurch die individuelle Belastungsgrenze der Bedienperson erkannt werden, beispielsweise, indem erfasst wird, dass die Bedienperson trotz an sich schneller Bewegungen kaum eine gesteigerte Puls- und/oder Atemfrequenz und/oder erhöhte Hautfeuchtigkeit aufweist.

Eine Weiterbildung zeichnet sich dadurch aus, dass eine Wirkung einer Änderung der Steuerung der Plattenaufteilanlage auf die aktuelle Belastung oder aktuelle Verhaltenseigenschaft der Bedienperson ausgewertet wird, und dass eine weitere Änderung der Steuerung der Plattenaufteilanlage von dieser Wirkung abhängt. Hierdurch wird der Tatsache Rechnung getragen, dass es sein kann, dass eine erste Änderung der Steuerung der Plattenaufteilanlage entweder eine zu geringe oder eine zu starke Änderung der Belastung der Bedienperson zur Folge haben kann. Durch eine entsprechende Auswertung kann in einem weiteren Schritt die Steuerung die weiteren Änderungen optimieren.

Eine Weiterbildung zeichnet sich dadurch aus, dass mindestens ein Bedienbefehl der Plattenaufteilanlage von der Bedienperson durch eine Geste übermittelt wird. Dies ist in Kombination mit der der vorliegenden Erfindung zu Grunde liegenden Erfassung der Belastung und/oder Verhaltenseigenschaft besonders einfach realisierbar.

Die Zeichnung zeigt ein Beispiel der Erfindung. In der Zeichnung zeigen:
Figur 1 eine Draufsicht auf eine Maschine in Form einer Plattenaufteilanlage; und
Figur 2 eine perspektivische Darstellung auf eine Plattenaufteilanlage, die zu der von Figur 1 sehr ähnlich ist.

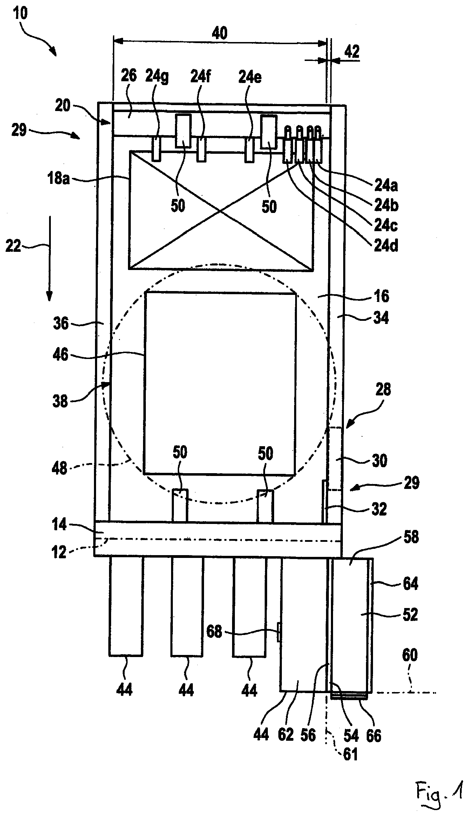

Eine Maschine in Form einer Plattenaufteilanlage trägt in Figur 1 insgesamt das Bezugszeichen 10. Sie umfasst als Aufteileinrichtung eine Säge, welche in Figur 1 jedoch nicht dargestellt ist. Lediglich die Aufteil- bzw. Sägelinie ist durch eine strichpunktierte Linie mit dem Bezugszeichen 12 angedeutet. Auch Aufteileinrichtungen mit anderen Trennverfahren kommen in Frage, beispielsweise eine Aufteileinrichtung mit einem Fräswerkzeug. Oberhalb der Sägelinie 12 ist ein Druckbalken 14 vorhanden.

Zu der hier konkret gezeigten Plattenaufteilanlage 10 gehört ferner ein Auflagetisch 16, der beispielsweise durch eine Vielzahl von Rollen (nicht dargestellt) gebildet wird. Auf dem Auflagetisch 16 liegt bei der in Figur 1 dargestellten Ausgangskonfiguration der Plattenaufteilanlage 10 ein Stapel von plattenförmigen Werkstücken 18a. Dieser kann von einer ersten Vorschubeinrichtung 20 in Vorschubrichtung (Pfeil 22) und auch entgegen der Vorschubrichtung 22 bewegt werden, indem der Werkstückstapel 18 von ersten Greifeinrichtungen 24a bis 24g gegriffen wird. Diese sind an einem ersten Träger 26 angebracht.

Die Plattenaufteilanlage 10 umfasst ferner eine zweite Vorschubeinrichtung 28, die in der in Figur 1 dargestellten Ruheposition ganz in der Nähe zu der Sägelinie 12 angeordnet ist. Die zweite Vorschubeinrichtung 28 umfasst einen zweiten Träger 30, an dem seitlich, zum Auflagetisch 16 hin, eine zweite Greifeinrichtung 32 befestigt ist. Die beiden Vorschubeinrichtungen 20 und 28 bilden insgesamt eine Fördereinrichtung 29.

Der zweite Träger 30 ist, wie weiter unten noch stärker im Detail erläutert werden wird, an der Unterseite eines dritten Trägers 34 befestigt, der sich parallel zur Vorschubrichtung 22 erstreckt und den Auflagetisch 16 seitlich begrenzt. Parallel zum dritten Träger 34 ist auf der anderen Seite des Auflagetisches 16 ein vierter Träger 36 vorhanden. Der erste Träger 26 ist in der Art eines Portals auf den Oberseiten des dritten Trägers 34 beziehungsweise des vierten Trägers 36 gelagert.

Quer zur Vorschubrichtung 22 wird durch den Auflagetisch 16 und die beiden Träger 34 und 36 ein Vorschubbereich 38 definiert, in dem die von den Vorschubeinrichtungen 20 und 28 zu bewegenden Werkstücke 18 angeordnet werden können. Der Vorschubbereich 38 weist wiederum quer zur Vorschubrichtung 22 einen ersten Breitenbereich 40 und einen zweiten Breitenbereich 42 auf, die in Figur 1 durch entsprechende Breitenpfeile gekennzeichnet sind. Der erste Breitenbereich 40 ist dadurch definiert, dass in ihm die ersten Greifeinrichtungen 24a bis 24g angeordnet sind, und der zweite Breitenbereich 42 ist dadurch definiert, dass in ihm die zweite Greifeinrichtung 32 angeordnet ist. Man erkennt aus Figur 1, dass der erste Breitenbereich 40 direkt an den zweiten Breitenbereich 42 angrenzt, mit diesem jedoch nicht überlappt. Ferner erkennt man aus Figur 1, dass der zweite Träger 30 seitlich außerhalb von dem Vorschubbereich 38 beziehungsweise von dem zweiten Breitenbereich 42 gehalten ist.

Der erste Träger 26 ist seitlich vom dritten Träger 34 angeordnet und mittels einer nicht sichtbaren Rollenauflage in einer Nut auf der Oberseite des als Doppel-T-Profil ausgebildeten dritten Trägers 34 gelagert. Die Lagerung des ersten Trägers 26 auf dem vierten Träger 36 ist spiegelbildlich gleich. Der zweite Träger 30 der zweiten Vorschubeinrichtung 28 ist als Schlitten oder Wagen ausgeführt, der an einer in der Figur nicht sichtbaren Schiene an der Unterseite des dritten Trägers 34 längsverschieblich geführt ist. Der zweite Träger 30 ist also seitlich außerhalb von dem Vorschubbereich gehalten.

Beide Greifeinrichtungen 24 und 32 weisen an ihrem in Vorschubrichtung 22 zeigenden Ende obere und untere Greifbacken auf. Während die unteren Greifbacken starr sind, können die oberen Greifbacken in vertikaler Richtung bewegt werden. Auf diese Weise können zwischen den Greifbacken einer Greifeinrichtung 24 und 32 Werkstücke verklemmt werden. Von den sieben ersten Greifeinrichtungen 24a bis 24g können die vier Greifeinrichtungen 24a bis 24d, die zu der zweiten Vorschubeinrichtung 28 wenigstens in etwa benachbart sind, von einer vorderen Vorschubstellung in eine hintere Ruhestellung und zurück bewegt werden. Die anderen ersten Greifeinrichtungen 24e bis 24g haben Ruhestellung und Vorschubstellung senkrecht übereinander liegend.

Man erkennt aus Figur 1, dass der zweite Breitenbereich 42, der durch die Breite der zweiten Greifeinrichtung 32 definiert ist, deutlich kleiner ist als der erste Breitenbereich 40, in dem die ersten Greifeinrichtungen 24a bis 24g mindestens während einer Vorschubbewegung angeordnet sind.

Dabei entspricht die Höhe eines Freiraums (ohne Bezugszeichen) unterhalb der zweiten Greifeinrichtung 32 in deren angehobener Ruhestellung ungefähr der maximalen Höhe eines von der ersten Greifeinrichtung 24 greifbaren Stapels von Werkstücken. In gleicher Weise gilt, dass die Höhe eines Freiraums zwischen der Unterseite der ersten Greifeinrichtung 24 und dem Auflagetisch 16, in der angehobenen Ruhestellung der ersten Greifeinrichtung 24, ungefähr der maximalen Höhe eines von der zweiten Greifeinrichtung 32 greifbaren Stapels von Werkstücken entspricht.

Die in Figur 1 gezeigte Plattenaufteilanlage 10 weist auf der vom Auflagetisch 16 abgewandten Seite der Sägelinie 12 beziehungsweise des Druckbalkens 14 einen aus mehreren Einzelteilen bestehenden Entnahmetisch 44 auf. Von diesem können, wie weiter unten noch im Detail ausgeführt werden wird, die von der Säge aufgeteilten Werkstücke 18 von einer Bedienperson der Plattenaufteilanlage 10 entnommen oder für eine weitere Aufteilung der ersten Vorschubeinrichtung 20 und/oder der zweiten Vorschubeinrichtung 28 erneut zugeführt werden.

Ferner verfügt die hier konkret gezeigte Plattenaufteilanlage 10 im Bereich des Auflagetisches 16 über einen Drehtisch 46. Der bei einer Drehung des Drehtisches 46 umstrichene maximale Außenradius ist in Figur 1 durch eine strichpunktierte Linie mit dem Bezugszeichen 48 angedeutet. Außerdem sind zum einen am Druckbalken 14 und zum anderen am ersten Träger 26 jeweils zwei Ausrichtanschläge 50 vorhanden, die von einer abgesenkten Ruhestellung in eine angehobene Arbeitsposition und zurück bewegt werden können. Der Drehtisch 46 und die Ausrichtanschläge 50 sind jedoch optional.

In Figur 1 rechts neben dem äußersten rechten Teil-Entnahmetisch 44 ist ein Puffertisch 52 angeordnet. Zwischen Puffertisch 52 und dem Entnahmetisch 44 ist ein sich parallel zur Vorschubrichtung 22 erstreckendes Winkellineal 54 angeordnet, welches fest mit dem Puffertisch 52 verbunden ist. Eine Oberseite 56 des Winkellineals 54 ist bündig mit einer Oberseite 58 des Puffertisches 52. Der Puffertisch 52 ist gemeinsam mit dem Winkellineal 54 durch eine in der Zeichnung nicht näher dargestellte Kinematik in der Höhe verstellbar. Darüber hinaus ist seine Neigung um eine parallel zur Sägelinie 12 und durch den von der Sägelinie entfernt liegenden Rand verlaufende Achse 60 verstellbar. Ferner kann die Neigung des Puffertisches 52 um eine Achse 61 verstellt werden, die längs der Längserstreckung des Winkellineals 54 verläuft und in etwa in der Oberseite 56 des Winkellineals 54 liegt. Die Verstellung kann pneumatisch oder elektrisch erfolgen.

Bei einer alternativen, jedoch nicht dargestellten Ausführungsform einer Plattenaufteilanlage 10 ist der Puffertisch 52 in der Höhe nicht verstellbar, seine Oberseite 58 ist jederzeit bündig mit einer Oberseite 62 des Entnahmetisches 44. Bei dieser Ausführungsform ist der Puffertisch relativ zu einem verlängerten Entnahmetisch 44 versetzt angeordnet, so dass das Winkellineal 54 den Transport des Werkstückes 18 nicht verhindert.

An seinem vom Entnahmetisch 44 fernliegenden Rand weist der Puffertisch 52 einen Anschlag in Form einer vertikal stehenden brettartigen Leiste 64 auf. Alternativ könnte anstelle oder zusätzlich zu der Leiste 64 auch eine Röllchenleiste, eine bedüste Leiste oder eine Mehrzahl von Röllchenleisten angeordnet sein. An seinem von der Aufteileinrichtung beziehungsweise der Sägelinie 12 entfernt liegenden Rand weist der Puffertisch 52 (und optional auch die Leiste 64) eine Verzögerungseinrichtung 66 auf. Diese ist bei der hier gezeigten Ausführungsform durch einen Bürstenabschnitt gebildet.

Auf der vom Puffertisch 52 abgewandten Seite des zu diesem unmittelbar benachbarten Teil-Entnahmetisches 44 ist eine Bedieneinrichtung 68 angeordnet, mit welcher die Höhe des Puffertisches 52 und damit auch des Winkellineals 54 und die Neigung des Puffertisches 52 um die Achsen 60 und 61 verändert werden kann. Die Bedieneinrichtung 68 bzw. die mit ihr verbundene Steuer- und Regeleinrichtung kann so programmiert sein, dass bei einer Betätigung einer der Tasten der Puffertisch 52 mit dem Winkellineal 54 eine ganz bestimmte vorgegebene Position einnimmt. Die Einstellung der Neigung kann auch vollautomatisch durch eine Steuer- und Regeleinrichtung erfolgen, welche den Betrieb der Plattenaufteilanlage 10 vollautomatisch steuert und regelt.

Hingewiesen sei noch darauf, dass sowohl der Entnahmetisch 44 als auch der Puffertisch 52 und auch das Winkellineal 54, wie bereits erwähnt wurde, als sogenannte "Luftkissentische" ausgeführt sind. Diese weisen auf ihrer Oberseite eine Vielzahl von durch ein Kugelventil verschließbaren Luftdüsen auf. Liegt ein Werkstück auf einer solchen Luftdüse, wird die Kugel des Kugelventils durch das Gewicht des Werkstücks nach unten gedrückt, so dass Luft aus der Luftdüse ausströmen und zwischen Puffertisch 52 beziehungsweise Entnahmetisch 44 und dem Werkstück ein Luftkissen ausbilden kann. Durch eine Änderung des Luftstromes kann die Reibung zwischen dem Entnahmetisch 44 und den Werkstücken 18 und damit die Geschwindigkeit der Werkstücke 18 auf dem Luftkissen manuell oder automatisch gesteuert bzw. geregelt werden.

Die Plattenaufteilanlage 10 arbeitet folgendermaßen: Zunächst wird ein vergleichsweise großes plattenförmiges Werkstück, wie es beispielsweise in Figur 1 mit dem Bezugszeichen 18a bezeichnet ist, von der ersten Vorschubeinrichtung 20 der Säge zugeführt und in mehrere längliche, streifenartige Werkstücke aufgeteilt. Dies wird als "Längsaufteilung" bezeichnet. Die aufgeteilten streifenartigen Werkstücke werden dann von einer Bedienperson, die im Bereich des Entnahmetisches 44 steht, auf dem Entnahmetisch 44 um 90° gedreht und an dem Winkellineal 54 in Anlage gebracht.

Hierzu wird der Puffertisch 52 um die Achse 60 verschwenkt, so dass seine Oberseite 58 an seinem zur Sägelinie 12 benachbarten Ende höher ist als die Oberseite 62 des Entnahmetisches 44 und außerdem insgesamt translatorisch etwas angehoben. Gleiches gilt auch für das Winkellineal 54. Die beiden streifenförmigen Werkstücke 18b werden von der Bedienperson über die Sägelinie 12 hinweg in Richtung der beiden Vorschubeinrichtungen 20 und 28 geschoben, um von diesen ergriffen zu werden. Dabei greift die zweite Vorschubeinrichtung 28 das zum Winkellineal 54 benachbarte Werkstück 18b, wohingegen die erste Vorschubeinrichtung 20 das andere streifenförmige Werkstück 18b greift.

Nun wird ein automatisierter und von einer nicht gezeigten Steuer- und Regeleinrichtung gesteuerter Vorgang in Gang gesetzt, bei dem die beiden Vorschubeinrichtungen 20 und 28 die beiden streifenförmigen Werkstücke 18b vom Entnahmetisch 44 entgegen der Vorschubrichtung 22 über die Sägelinie 12 hinweg vollständig auf den Auflagetisch 16 ziehen. Dort werden die beiden Werkstücke 18b an einem dort im Bereich des dritten Trägers 34 vorhandenen seitlichen Winkellineal (nicht gezeigt) in Anlage gebracht und dann in Vorschubrichtung 22 der Säge zugeführt. Diese Zuführung geschieht dabei durch die erste Vorschubeinrichtung 20 unabhängig von der zweiten Vorschubeinrichtung 28, so dass am einen streifenförmigen Werkstück 18b ein anderes Schnittbild realisiert werden kann als am anderen streifenförmigen Werkstück 18b. Dieses Schnittbild wird durch entsprechende Sägeschnitte entlang der Sägelinie 12 realisiert.

Während dieses automatisierten Vorganges kann die Bedienperson aufgeteilte Werkstücke 18c, welche auf dem Puffertisch 52 liegen und von einem vorhergehenden Sägevorgang stammen, vom Puffertisch 52 entnehmen und beispielsweise auf die Abstapelplätze 72 abstapeln. Sind die Werkstücke 18c vom Puffertisch 52 entnommen, wird der Puffertisch 52 von der Bedienperson durch eine Betätigung der Bedieneinrichtung 68 wieder horizontal gestellt und/oder abgesenkt, so dass seine Oberseite 58 und die Oberseite 56 des Winkellineals 54 bündig und plan sind mit der Oberseite 62 des Entnahmetisches 44.

Bei dem oben beschriebenen automatisierten Aufteilvorgang werden nun verschiedene kleine Einzelwerkstücke 18d erzeugt, die von den Vorschubeinrichtungen 20 und 28 auf den Entnahmetisch 44 geschoben werden. Ein Teil der auf diese Weise auf den Entnahmetisch 44 gelangenden Werkstücke 18d wird von der Bedienperson direkt vom Entnahmetisch 44 entnommen und auf die Abstapelplätze 72 verteilt.

Da aufgrund der hohen Taktgeschwindigkeit der Plattenaufteilanlage 10 die Menge der auf den Entnahmetisch 44 während einer Zeiteinheit gelangenden Werkstücke 18d jedoch größer ist als die Menge, die die Bedienperson während dieser Zeiteinheit auf die Abstapelplätze 72 verteilen kann, schiebt die Bedienperson jene Werkstücke, die in der zur Verfügung stehenden Zeiteinheit nicht auf die Abstapelplätze 72 verteilt werden können, über das abgesenkte Winkellineal 54 hinweg auf den Puffertisch 52. Hierbei handelt es sich bei dem hier konkret beschriebenen Fall um zwei Werkstücke, die die Bezugszeichen 18c tragen, wobei die Anzahl selbstverständlich von der jeweiligen Betriebssituation der Plattenaufteilanlage 10 und der Arbeitsbelastung der Bedienperson abhängt. Am Ende dieses Vorganges ist der Entnahmetisch 44 von aufgeteilten Werkstücken 18d frei, wohingegen auf dem Puffertisch 52 die besagten zwei neuen Werkstücke 18c verbleiben.

Nun beginnt der oben beschriebene Vorgang von Neuem: Der Puffertisch 52 wird durch eine entsprechende Betätigung der Bedieneinrichtung 68 (oder alternativ automatisch) angehoben und gleichzeitig um die Achse 61 so verschwenkt, dass der vom Entnahmetisch 44 entfernt liegende Rand des Puffertisches 52 abgesenkt ist. Hierdurch rutschen die Werkstücke 18c bis an den Anschlag 64. Außerdem wird der Puffertisch 52 auch um die Achse 60 so verschwenkt, dass das zur Sägelinie 12 benachbarte Ende des Puffertisches 52 gegenüber dem von der Sägelinie 12 fern liegenden Ende angehoben ist. Hierdurch rutschen die Werkstücke 18c bis zur Verzögerungseinrichtung 66, wo sie abgebremst werden und zum Stillstand kommen.

Die Bedienperson kann nun von Neuem streifenförmige Werkstücke 18b am Winkellineal 54 anlegen, so dass diese von den beiden Vorschubeinrichtungen 20 und 28 gegriffen und im Rahmen des automatischen Vorganges auf den Auflagetisch 16 gezogen und dann der Sägelinie 12 zugeführt und dort aufgeteilt werden können. Während dieses automatisierten Vorganges können dann die auf dem Puffertisch 52 "geparkten" Werkstücke 18c entnommen und auf die Abstapelplätze 72 verteilt werden, und so weiter.

Das oben beschriebene Verfahren funktioniert nicht nur mit einzelnen Werkstücken, sondern auch mit Stapeln von Werkstücken, also mehreren aufeinanderliegenden Werkstücken.

Ferner versteht sich, dass die Einstellung des Grads der Neigung um die Achsen 60 und 61 nicht zwingend von der Bedienperson über die Bedieneinrichtung 68 eingestellt werden muss. Möglich ist auch, dass die Steuer- und Regeleinrichtung, welche den Betrieb der Plattenaufteilanlage 10 steuert und regelt, weiß, ob Einzelplatten oder Plattenstapel gesägt werden, und die Neigung automatisch entsprechend vorgibt.

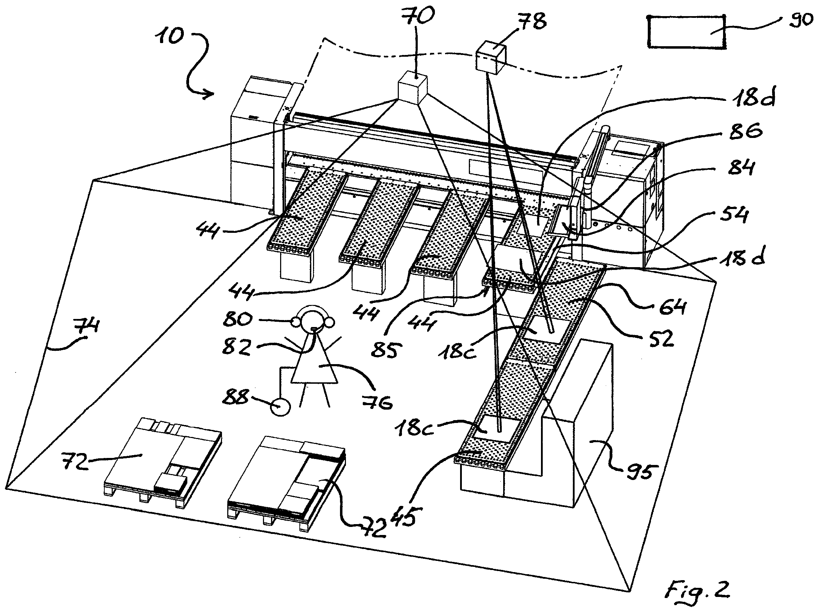

Wie aus Figur 2 ersichtlich ist, die eine nur in hier nicht erheblichen Details von Figur 1 unterschiedliche Plattenaufteilanlage 10 zeigt, gehört zu der Plattenaufteilanlage 10 auch eine Kamera 70, die oberhalb vom Entnahmetisch 44 und vom Puffertisch 52 angeordnet ist. Das Blickfeld der Kamera 70 ist auf den Entnahmetisch 44, den Puffertisch 52, einen Abstapelplatz 72, und einen an diese beiden Tische 44 und 52 angrenzenden Bereich 74 gerichtet, in dem sich eine Bedienperson 76 während der Bedienung der Plattenaufteilanlage 10 aufhalten kann.

Ferner gehört zu der Plattenaufteilanlage 10 noch ein Laserprojektor 78, der Informationen oder Anweisungen an die Bedienperson auf Werkstücke projizieren kann, die auf dem Entnahmetisch 44, dem Puffertisch 52 oder dem Abstapelplatz 72 liegen. Außerdem trägt die Bedienperson 76 ein Headset bestehend aus Kopfhörer 80 und Mikrofon 82, welches von der Bedienperson 76 zur Spracheingabe benutzt werden kann. Zur taktilen Eingabe von Befehlen ist eine Tastatur 84 vorhanden, zur Anzeige von Informationen ein Bildschirm 86 mit einem nicht gezeigten Antrieb zur Änderung der Ausrichtung und Position des Bildschirms 86. Die Bedienperson 76 ist ferner mit Biosensoren versehen, die einen Puls, einen Blutdruck, eine Atemfrequenz, eine Körpertemperatur, eine Hautfeuchtigkeit erfassen können. Dies ist exemplarisch durch das Bezugszeichen 88 angedeutet. Weiterhin sind in Figur 2 ein weiterer höhenverstellbarer Entnahmetisch 45 und eine nachgelagerte Einrichtung, beispielsweise eine automatische Abstapelvorrichtung 95 dargestellt.

Schließlich umfasst die Plattenaufteilanlage 10 eine Steuer- und Regeleinrichtung 90, welche Informationen von zahlreichen Erfassungseinrichtungen erhält, beispielsweise der Kamera 70, der Tastatur 84, einer Start/Stoppleiste 85 zum Anhalten oder Wiederanfahren, dem Mikrofon 82, und den Biosensoren 88. Die Steuer- und Regeleinrichtung 90 verfügt über einen Speicher, auf dem ein Computerprogramm abgespeichert ist, mit dem ein Verfahren zum Betreiben der Plattenaufteilanlage 10 gesteuert werden kann. Die Steuer- und Regeleinrichtung 90 verfügt beispielsweise über eine Bilderkennungs- und -auswerteeinrichtung, welche die aktuelle Position der Bedienperson 76, deren Körperhaltung, Bewegungsgeschwindigkeiten und - beschleunigungen der Bedienperson 76 und von Körperteilen der Bedienperson 76, eine Lidweite und eine Pupillenweite eines Auges der Bedienperson ermitteln kann.

Wie weiter unten noch dargelegt werden wird, werden bei dem gerade erwähnten Verfahren mittels der Kamera 70, dem Mikrofon 82 und den Biosensoren 88 Größen erfasst, die eine aktuelle Belastung oder eine aktuelle Verhaltenseigenschaft der Bedienperson 76 charakterisieren. Die erfassten Größen werden ausgewertet, wobei die Steuerung der Plattenaufteilanlage 10 vom Ergebnis der Auswertung abhängt.

Dieses Verfahren bewirkt also, dass die Plattenaufteilanlage 10 mit der Bedienperson 76 selbstständig interagiert. Wird festgestellt, dass die Bedienperson 76 überlastet ist oder eine Überlastung droht, oder dass auf einfache Art und Weise die Belastung der Bedienperson 76 verringert werden kann, wird die Steuerung der Plattenaufteilanlage 10 so angepasst, dass die Belastung der Bedienperson 76 verringert wird bzw. eine Überlastung gar nicht erst eintritt. Wird dagegen festgestellt, dass die Bedienperson 76 aktuell eher unterfordert ist, kann die Steuerung der Plattenaufteilanlage 10 ebenfalls entsprechend angepasst werden. Ziel des Verfahrens ist es, die Plattenaufteilanlage 10 so zu steuern, dass die Belastung der Bedienperson 76 in einem gewünschten Bereich liegt und eine optimale Prozesssicherheit und Produktivität gewährleistet sind.

Hierzu können mittels der Kamera 70 und einer in der Steuer- und Regeleinrichtung 90 enthaltenen Auswerteeinrichtung beispielsweise folgende Größen erfasst werden: eine Position der Bedienperson 76 relativ beispielsweise zu den Entnahmetischen 44 und 45, dem Puffertisch 52, den Abstapelplätzen 72, den nachgelagerten Einrichtung, wie beispielsweise der automatischen Abstapelvorrichtung 95, eine Geschwindigkeit des Körpers der Bedienperson 76, eine Geschwindigkeit einer Hand oder eine Drehgeschwindigkeit eines Kopfes der Bedienperson 76, eine Beschleunigung des Körpers der Bedienperson 76 oder einer Hand oder eines Kopfes der Bedienperson 76, ein Bewegungsmuster der Bedienperson 76 oder von deren Hand, eine Pausenlänge zwischen Bewegungen des Körpers, der Hand oder des Kopfes der Bedienperson 76, und/oder eine Haltung des Körpers der Bedienperson 76 (gebeugt, aufrecht, etc.). Mittels der Kamera 70 können auch biologische Größen wie beispielsweise eine Lidweite eines Auges, eine Pupillenweite eines Auges und/oder eine Mimik der Bedienperson erfasst werden. Über ein nicht dargestelltes Mikrofon könne ferner von der Bedienperson verursachte Geräusche, beispielsweise ein Schnaufen oder Ächzen. erfasst werden. Mittels der Biosensoren 88 werden beispielsweise die folgenden Größen erfasst: Puls, Blutdruck, Atemfrequenz, Körpertemperatur und/oder Hautfeuchtigkeit der Bedienperson 76.

Alle diese Größen können allein oder in Kombination die Belastung bzw. das belastungstypische Verhalten der Bedienperson 76 sehr gut beschreiben und für die Steuerung der Plattenaufteilanlage 10 durch entsprechende in der Steuer- und Regeleinrichtung 90 abgespeicherte und dort ablaufende Verfahren erfassbar und auswertbar machen. Auf eine aktuelle Überlastung der Bedienperson 76 kann beispielsweise dann geschlossen werden, wenn eine oder mehrere Größen einen Grenzwert erreichen oder überschreiten. Auf eine drohende Überlastung bzw. eine mögliche Verringerung der Belastung kann beispielsweise geschlossen werden, wenn eine aktuelle Position der Bedienperson 76 relativ beispielsweise zum Entnahmetisch 44, dem Puffertisch 52 oder dem Abstapelplatz 72 um mehr als einen Grenzwert entfernt ist.

Die Steuer- und Regeleinrichtung 90 ist so programmiert, dass die Verarbeitungsgeschwindigkeit der Plattenaufteilanlage 10 verlangsamt oder gestoppt wird, und/oder eine Anweisung an die Bedienperson 76 beispielsweise mittels der Kopfhörer 80 und/oder des Bildschirms 86 ausgegeben wird, wenn die Auswertung der Größe ergibt, dass die Bedienperson 76 überlastet ist. Dabei kann der Bildschirm 8 durch den oben genannten Antrieb immer optimal in Richtung der Bedienperson 76 ausgerichtet werden, und die Größe und Farbe der Anzeige auf dem Bildschirm 86 kann entsprechend der Entfernung der Bedienperson 76 vom Bildschirm 86 optimal angepasst werden.

In gleicher Weise wird der Betrieb der Plattenaufteilanlage 10 gestartet oder bzw. deren Arbeitsgeschwindigkeit erhöht und/oder eine Anweisung an die Bedienperson 76 ausgegeben, wenn die Auswertung der Größe ergibt, dass die Bedienperson 76 unterfordert ist.

Die Steuer- und Regeleinrichtung 90 ist ferner so programmiert, dass der Ablauf des durch die Plattenaufteilanlage 10 ausgeführten Verfahrens, insbesondere die Reihenfolge oder Art der Verfahrensschritte, vom Ergebnis der Auswertung abhängt. Beispielsweise kann ein zuvor festgelegter Schnittplan geändert werden, um auf eine erkannte Belastungssituation der Bedienperson 76 zu reagieren. Konkret können beispielsweise die Schnitte so verändert werden, dass die Bedienperson 76 von der Stelle, an der sie sich gerade befindet, den kürzesten Weg zur Weiterverarbeitung des erstellten Werkstücks gehen muss. Auch alle anderen oder einige der anderen beispielsweise oben beschriebenen Betriebsschritte können abhängig vom Ergebnis der Auswertung geändert bzw. angepasst werden.

Ferner wird die Konfiguration der Plattenaufteilanlage von der Steuer- und Regeleinrichtung 90 entsprechend der aktuellen Belastung oder abhängig von der festgestellten Verhaltenseigenschaft der Bedienperson 76 verändert. Beispielsweise wird die Position und/oder Höhe des Entnahmetisches 45 und/oder Puffertisches 52 automatisch an die aktuelle Position der Bedienperson angepasst, oder es wird der Bildschirm 88 auf die aktuelle Position der Bedienperson 76 ausgerichtet. Auch kann eine Ausrichtung und/oder Lage eines Werkstücks 18, eine Position und/oder Darstellung eines Bedienungselements (beispielsweise der Tastatur 84), eine Synchronisierung mit einer vorgelagerten und/oder nachgelagerten Einrichtung, beispielweise die automatische Abstapelvorrichtung 95 oder ihre Konfiguration, entsprechend verändert werden. Unter der Konfiguration werden die Lage und Position der Baugruppen zueinander und/oder zum Werkstück und/oder zur Bedienperson und/oder die Einstellung der Prozessparameter verstanden. Damit wird die unmittelbare Umgebung der Plattenaufteilanlage 10 auf die Bedienperson 76 durch die Steuer- und Regeleinrichtung 90 optimal angepasst.

Abhängig vom Ergebnis der Auswertung passt die Steuer- und Regeleinrichtung 90 auch eine Eigenschaft der Informationsausgabe an die Bedienperson 76 an: So kann beispielsweise eine an sich lediglich optische Informationsausgabe bei einer erkannten kritischen Belastung der Bedienperson zusätzlich auch akustisch erfolgen, es können Daten an eine andere Plattenaufteilanlage und/oder an eine andere Person (beispielsweise in der Arbeitsvorbereitung) übertragen werden, und die Art und Darstellung (Größe, Farbe, Geschwindigkeit) von Informationen beispielsweise auf dem Bildschirm 86 kann geändert werden. Beispielsweise kann dann, wenn die Bedienperson 76 eher weit weg von dem Bildschirm 86 ist, die Buchstaben- oder Symbolgröße der Anzeige auf dem Bildschirm vergrößert werden, oder es kann ein in den Figuren nicht gezeigter Lautsprecher auf die aktuelle Position der Bedienperson 76 ausgerichtet werden.

Auch kann gewählt werden, ob die Information an der Plattenaufteilanlage bzw. an einer bestimmten Stelle der Plattenaufteilanlage ausgegeben wird oder beispielsweise an einer nachgeschalteten Fertigungs- oder Bearbeitungseinrichtung oder einem Abstapelplatz, an dem Bildschirm 86, über den Laserprojektor 78, einen Lautsprecher, den Kopfhörer 80, oder sogar haptisch in Form eines Vibrierens des Entnahmetisches 44 und/oder 45 oder eines Bedienelements - beispielsweise der Start/Stoppleiste 85 - erfolgt.

Bei der dargestellten Plattenaufteilanlage 10 ist die Steuer- und Regeleinrichtung 90 so programmiert, dass während einer Lernphase im Betrieb der Plattenaufteilanlage 10 die Auswertung der Größe an die Person der Bedienperson 76 adaptiert wird. Beispielsweise kann hierdurch die individuelle Belastungsgrenze der Bedienperson 76 erkannt werden, beispielsweise, indem erfasst wird, dass die Bedienperson 76 trotz an sich schneller Bewegungen (von der Kamera 70 erfasst) kaum eine gesteigerte Puls- und/oder Atemfrequenz und/oder erhöhte Hautfeuchtigkeit aufweist (von den Biosensoren 88 erfasst).

Die Steuer- und Regeleinrichtung 90 ist außerdem so programmiert, dass eine Wirkung einer Änderung der Steuerung der Plattenaufteilanlage 10 auf die aktuelle Belastung oder aktuelle Verhaltenseigenschaft der Bedienperson 76 ausgewertet wird, und dass eine weitere Änderung der Steuerung der Plattenaufteilanlage 10 von dieser Wirkung abhängt.

## Patentansprüche

1. Verfahren zum Betreiben einer Plattenaufteilanlage (10), wobei mittels mindestens einer Erfassungseinrichtung (70, 82, 88) mindestens eine Größe erfasst wird, die eine aktuelle Belastung oder eine aktuelle Verhaltenseigenschaft einer Bedienperson (76) charakterisiert, die erfasste Größe ausgewertet wird, und die Steuerung der Plattenaufteilanlage (10) vom Ergebnis der Auswertung derart abhängt, dass die Plattenaufteilanlage mit der Bedienperson selbstständig interagiert, wobei dann, wenn festgestellt wird, dass die Bedienperson überlastet ist oder eine Überlastung droht, oder dass auf einfache Art und Weise die Belastung der Bedienperson verringert werden kann, die Steuerung der Plattenaufteilanlage so angepasst wird, dass die Belastung der Bedienperson verringert wird bzw. eine Überlastung gar nicht erst eintritt, indem die Maschinengeschwindigkeit verlangsamt oder gestoppt wird, **dadurch gekennzeichnet, dass** dann, wenn festgestellt wird, dass die Bedienperson aktuell eher unterfordert ist, die Steuerung der Plattenaufteilanlage entsprechend angepasst wird, indem die Maschinengeschwindigkeit erhöht wird.

2. Verfahren nach Anspruch 1, **dadurch gekennzeichnet, dass** die Größe umfasst: eine Position der Bedienperson (76) relativ zu einem Maschinenbereich (44, 45, 52, 72), eine Körpergeschwindigkeit, eine Gliedmaßengeschwindigkeit, eine Körperbeschleunigung, eine Gliedmaßenbeschleunigung, ein Körperbewegungsmuster, ein Gliedmaßenbewegungsmuster, eine Pausenlänge zwischen Bewegungen, eine Körperhaltung, einen Puls, einen Blutdruck, eine Atemfrequenz, eine Körpertemperatur, eine Hautfeuchtigkeit, eine Lidweite, eine Pupillenweite, eine Mimik.

3. Verfahren nach einem der vorhergehenden Ansprüche, **dadurch gekennzeichnet, dass** der Ablauf des durch die Plattenaufteilanlage (10) ausgeführten Verfahrens, insbesondere die Reihenfolge oder Art der Verfahrensschritte, vom Ergebnis der Auswertung abhängt.

4. Verfahren nach einem der vorhergehenden Ansprüche, **dadurch gekennzeichnet, dass** eine Maschinenkonfiguration von dem Ergebnis der Auswertung abhängt.

5. Verfahren nach Anspruch 4, **dadurch gekennzeichnet, dass** die Maschinenkonfiguration durch mindestens eine aus der folgenden Gruppe definiert ist: eine Position einer Werkstückeingabe, eine Position einer Werkstückentnahme (44, 45), eine Ausrichtung eines Werkstücks (18), eine Lage eines Werkstücks (18), eine Position eines Bedienelements, eine Darstellung eines Bedienungselements, eine Synchronisierung mit einer vorgelagerten Einrichtung, eine Synchronisierung mit einer nachgelagerten Einrichtung, eine Position einer nachgelagerten Einrichtung (95), eine Lage einer nachgelagerten Einrichtung (95), eine Position einer Komponente einer nachgelagerten Einrichtung (95), eine Lage einer Komponente einer nachgelagerten Einrichtung (95).

6. Verfahren nach einem der vorhergehenden Ansprüche, **dadurch gekennzeichnet, dass** eine Art und Weise einer Informationsausgabe und/oder ein Ort der Informationsausgabe vom Ergebnis der Auswertung abhängt.

7. Verfahren nach einem der vorhergehenden Ansprüche, **dadurch gekennzeichnet, dass** es eine Lernphase umfasst, während der die Auswertung der Größe an die Person der Bedienperson (76) adaptiert wird.

8. Verfahren nach einem der vorhergehenden Ansprüche, **dadurch gekennzeichnet, dass** eine Wirkung einer Änderung der Steuerung der Plattenaufteilanlage (10) auf die aktuelle Belastung oder aktuelle Verhaltenseigenschaft der Bedienperson (76) ausgewertet wird, und dass eine weitere Änderung der Steuerung der Plattenaufteilanlage (10) von dieser Wirkung abhängt.

9. Verfahren nach einem der vorhergehenden Ansprüche, **dadurch gekennzeichnet, dass** mindestens ein Bedienbefehl der Plattenaufteilanlage (10) von der Bedienperson (76) durch eine Geste übermittelt wird.

10. Plattenaufteilanlage (10), **dadurch gekennzeichnet, dass** sie eine Steuer- und/oder Regeleinrichtung (90) umfasst, welche zur Ausführung eines Verfahrens nach einem der vorhergehenden Ansprüche programmiert ist.

## Claims

1. Method for operating a panel sizing system (10), wherein by means of at least one detection means (70, 82, 88) at least one variable is detected which characterizes a current load on or a current behavioral property of an operator (76), the detected variable is evaluated, and the control of the panel sizing system (10) is based on the result of the evaluation such that the panel sizing system interacts with the operator independently, wherein if it is determined that the operator is overloaded or there is a threat of overloading, or that the load on the operator can easily be reduced, the control of the panel sizing system is adjusted so as to reduce the load on the operator or to prevent overloading from occurring in the first place by the machine speed being slowed or stopped, **characterized in that**, if it is determined that the operator is currently instead under-challenged, the control of the panel sizing system is adjusted accordingly by the machine speed being increased.

2. Method according to claim 1, **characterized in that** the variable comprises: a position of the operator (76) relative to a machine area (44, 45, 52, 72), a body speed, a limb speed, a body acceleration, a limb acceleration, a body movement pattern, a limb movement pattern, a pause length between movements, a posture, a pulse, a blood pressure, a respiratory rate, a body temperature, a skin moisture, an eyelid width, a pupil width, a facial expression.

3. Method according to any of the preceding claims, **characterized in that** the sequence of the process performed by the panel sizing system (10), in particular the sequence or type of process steps, is based on the result of the evaluation.

4. Method according to any of the preceding claims, **characterized in that** a machine configuration is based on the result of the evaluation.

5. Method according to claim 4, **characterized in that** the machine configuration is defined by at least one of the items from the following group: a position of a workpiece input, a position of a workpiece removal (44, 45), an orientation of a workpiece (18), a location of a workpiece (18), a position of an operating element, a representation of an operating element, a synchronization with an upstream device, a synchronization with a downstream device, a position of a downstream device (95), a location of a downstream device (95), a position of a component of a downstream device (95), a location of a component of a downstream device (95).

6. Method according to any of the preceding claims, **characterized in that** a manner of information output and/or a location of the information output is based on the result of the evaluation.

7. Method according to any of the preceding claims, **characterized in that** it includes a learning phase during which the evaluation of the variable is adapted to the individual operator (76).

8. Method according to any of the preceding claims, **characterized in that** an effect of changing the control of the panel sizing system (10) to the current load on or current behavioral property of the operator (76) is evaluated, and **in that** a further change in the control of the panel sizing system (10) is based on this effect.

9. Method according to any of the preceding claims, **characterized in that** at least one operating command for the panel sizing system (10) from the operator (76) is transmitted by a gesture.

10. Panel sizing system (10), **characterized in that** it comprises an open-loop and/or closed-loop control device (90) which is programmed to carry out a method according to any of the preceding claims.

## Revendications

1. Procédé destiné à faire fonctionner une installation à diviser des panneaux (10), dans lequel au moins une grandeur qui caractérise une charge actuelle ou une caractéristique de comportement actuelle d'un opérateur (76) est détectée au moyen d'au moins un dispositif de détection (70, 82, 88), la grandeur détectée est évaluée, et la commande de l'installation à diviser des panneaux (10) dépend du résultat de l'évaluation de telle sorte que l'installation à diviser des panneaux interagit indépendamment avec l'opérateur, dans lequel, lorsqu'il est constaté que l'opérateur est surchargé ou qu'une surcharge menace ou que la charge de l'opérateur peut être réduite d'une manière simple, la commande de l'installation à diviser des panneaux est adaptée de telle manière que la charge de l'opérateur est réduite ou bien qu'une surcharge ne se produit pas du tout en ralentissant ou arrêter la vitesse de la machine, **caractérisé par le fait que**, lorsqu'il est constaté que, actuellement, plutôt, il n'est pas exigé suffisamment de l'opérateur, la commande de l'installation à diviser des panneaux est adaptée de manière correspondante en augmentant la vitesse de la machine.

2. Procédé selon la revendication 1, **caractérisé par le fait que** ladite grandeur comprend: une position de l'opérateur (76) par rapport à une zone de machine (44, 45, 52, 72), une vitesse de corps, une vitesse de membre, une accélération de corps, une accélération de membre, un modèle de mouvement de corps, un modèle de mouvement de membre, une longueur de pause entre des mouvements, une posture, un pouls, une pression artérielle, une fréquence respiratoire, une température corporelle, une humidité de la peau, une largeur de paupière, une largeur pupillaire, une mimique.

3. Procédé selon l'une quelconque des revendications précédentes, **caractérisé par le fait que** le déroulement du procédé mis en œuvre par l'installation à diviser des panneaux (10), en particulier l'ordre ou le type des étapes du procédé, dépend du résultat de l'évaluation.

4. Procédé selon l'une quelconque des revendications précédentes, **caractérisé par le fait qu'**une configuration de machine dépend du résultat de l'évaluation.

5. Procédé selon la revendication 4, **caractérisé par le fait que** la configuration de la machine est définie par l'un au moins du groupe suivant: une position d'une introduction de pièce, une position d'un retrait de pièce (44, 45), un alignement d'une pièce (18), une orientation d'une pièce (18), une position d'un élément de commande, une représentation d'un élément de commande, une synchronisation avec un dispositif situé en amont, une synchronisation avec un dispositif situé en aval, une position d'un dispositif (95) situé en aval, une orientation d'un dispositif (95) situé en aval, une position d'un composant d'un dispositif (95) situé en aval, une orientation d'un composant d'un dispositif (95) situé en aval.

6. Procédé selon l'une quelconque des revendications précédentes, **caractérisé par le fait qu'**une manière d'une sortie d'information et/ou un lieu de la sortie d'information dépend du résultat de l'évaluation.

7. Procédé selon l'une quelconque des revendications précédentes, **caractérisé par le fait qu'**il comprend une phase d'apprentissage au cours de laquelle l'évaluation de la grandeur est adaptée à la personne de l'opérateur (76).

8. Procédé selon l'une quelconque des revendications précédentes, **caractérisé par le fait qu'**un effet d'une modification de la commande de l'installation à diviser des panneaux (10) sur la charge actuelle ou la caractéristique de comportement actuelle de l'opérateur (76) est évalué, et qu'une autre modification de la commande de l'installation à diviser des panneaux (10) dépend de cet effet.

9. Procédé selon l'une quelconque des revendications précédentes, **caractérisé par le fait qu'**au moins une commande de manipulation de l'installation à diviser des panneaux (10) est transmise par l'opérateur (76) au moyen d'un geste.

10. Installation à diviser des panneaux (10) **caractérisée par le fait qu'**elle comprend un dispositif de commande et/ou de régulation (90) qui est programmé pour la mise en œuvre d'un procédé selon l'une quelconque des revendications précédentes.
